# FASCICULE DE BREVET EUROPEEN

(11) **EP 4 119 991 B1**
(45) Date de publication et mention de la délivrance du brevet: **12.02.2025**
(21) Numéro de dépôt: 22183225.6
(22) Date de dépôt: 06.07.2022
(51) Int. Cl.: G01T 3/00, G21C 17/108, G01T 1/205, G01T 3/06

(54) **DISPOSITIF DE DETECTION NEUTRONIQUE A CHAMBRE D'IONISATION ET A TRANSDUCTION OPTIQUE COMPRENANT PLUSIEURS CAVITES OPTIQUES, LOGEANT CHACUNE L'EXTREMITE LIBRE D'UNE FIBRE OPTIQUE**
NEUTRONENDETEKTIONSVORRICHTUNG MIT IONISIERUNGSKAMMER UND OPTISCHER WANDLUNG, DIE MEHRERE OPTISCHE HOHLRÄUME UMFASST, IN DENEN JEWEILS DAS FREIE ENDE EINER OPTISCHEN FASER UNTERGEBRACHT IST
NEUTRONIC DETECTION DEVICE WITH IONISATION CHAMBER AND OPTICAL TRANSDUCTION COMPRISING A PLURALITY OF OPTICAL CAVITIES, EACH CONTAINING THE FREE END OF AN OPTICAL FIBRE

(30) Priorité: 12.07.2021 FR 2107542
(43) Date de publication de la demande: 18.01.2023
(73) Titulaire: Commissariat à l'Energie Atomique et aux Energies Alternatives, 75015 Paris (FR)
(72) Inventeur: JAMMES, Christian, 13115 Saint-Paul-lès-Durance (FR); LAMOTTE, Maxime, 84120 Pertuis (FR); DE IZARRA, Grégoire, 13090 Aix-en-Provence (FR)
(74) Mandataire: Cabinet Nony

(56) Documents cités:
- WO-A1-2017/027679
- JP-A- H0 980 160
- JP-A- H09 218 270
- RU-C2- 2 253 135

## Description

### Domaine technique

La présente invention concerne le domaine de l'instrumentation, notamment des réacteurs nucléaires de fission et de fusion.

Elle concerne plus particulièrement des détecteurs de neutrons du type chambre d'ionisation, et en particulier, des détecteurs de neutrons fonctionnant sur une étendue de mesure de plusieurs décades et pouvant s'adapter à de fortes contraintes d'installation telles qu'un diamètre infra-centimétrique de doigt de gant et de passage de câble.

### Technique antérieure

La conduite d'un réacteur, qu'il soit de puissance ou de recherche, répond à des exigences fortes en terme de suivi de plusieurs paramètres de fonctionnement. Parmi ceux-ci, la puissance thermique produite est un des paramètres clés. Celle-ci est directement corrélée au flux neutronique à proximité ou au sein de la cuve. Ainsi, une augmentation du flux de neutrons se traduit par une augmentation du niveau de puissance du réacteur.

Différentes techniques de mesure du flux neutronique existent, et sont regroupées sous le terme de détecteur de neutrons. Le développement de ceux-ci doit prendre en compte plusieurs contraintes.

Parmi les plus importantes figurent les contraintes d'installation. Ces contraintes géométriques sont, par exemple, le diamètre des doigts de passage, du type doigt de gants ou encore celui des passages de câble.

Afin de limiter le nombre de détecteurs à introduire en cœur, un fonctionnement sur une étendue de mesure de plusieurs décades constitue un avantage certain.

Un seul détecteur, au lieu de trois habituellement, permet alors le suivi du flux neutronique depuis l'état de démarrage jusqu'à l'état de pleine puissance.

Une autre contrainte concerne l'intégrité du signal. Dans le cas d'une transmission électrique, connue pour être la seule utilisée actuellement, le recours à un câble coaxial blindé s'impose, afin de se protéger des perturbations électromagnétiques ou encore de possibles problèmes de diaphonie entre les lignes de transmission du signal elles-mêmes. Par ailleurs, les hauts niveaux d'irradiation au sein d'une cuve de réacteur, ainsi que des températures dépassant les 300°C limitent drastiquement le type de détecteurs neutroniques pouvant être utilisées.

Les détecteurs de la famille des chambres à ionisation connus pour leur robustesse dans un tel environnement aux conditions extrêmes sont ainsi privilégiés. Des détecteurs tels que des scintillateurs ou encore des détecteurs solides à base de silicium ne présentent en aucune façon le même niveau de fiabilité dans ce cas précis.

Les chambres d'ionisation actuelles, telles que des chambres à dépôt de bore ou des chambres à fission, fonctionnent classiquement sur le principe d'une transduction d'un flux neutronique en un signal électrique. Cette transduction électrique est réalisée au moyen d'une ou plusieurs paires d'électrodes polarisées à quelques centaines de volts. Le nombre de paires d'ions collectées par les électrodes est égal au mieux au nombre de paires d'ions produites par le rayonnement incident, et dépend du type et de l'énergie cinétique des particules incidentes.

Comme déjà mentionné, pour obtenir un signal exploitable, une transduction électrique nécessite un blindage électromagnétique de la ligne de transmission.

Par ailleurs, une transduction électrique est peu satisfaisante en termes de nombre de points de mesure réalisables en présence de fortes contraintes d'encombrement. En effet, si le problème à résoudre est d'avoir plusieurs points de mesure distribué le long d'un canal cylindrique de 15 mm de diamètre et de 1 m de long, cette solution ne permet pas d'obtenir plus de deux points de mesure à cause du diamètre de la ligne de transmission (câble coaxial d'au moins 6 mm de diamètre), tout en supposant que le diamètre du détecteur soit d'environ 10 mm tout au plus.

La demande de brevet WO 2017/027679 propose un détecteur neutronique multipoint, de ce type dénommé commercialement par le déposant « Micropocket fission detector» (acronyme MPFD). Les faibles performances de ce détecteur MPFD, en termes de transmission des signaux, le rendent non opérationnel : des perturbations des champs électriques par les lignes de transmission apparaissent ainsi qu'un phénomène de diaphonie inductive et capacitive entre ces mêmes lignes de transmission.

Le principe d'une nouvelle voie en rupture par rapport à celle de la transduction électrique a été proposée par les inventeurs : voir par exemple les publications [1] à [5]. Ce principe consiste à réaliser une transduction optique en collectant les photons produits dans une chambre à ionisation.

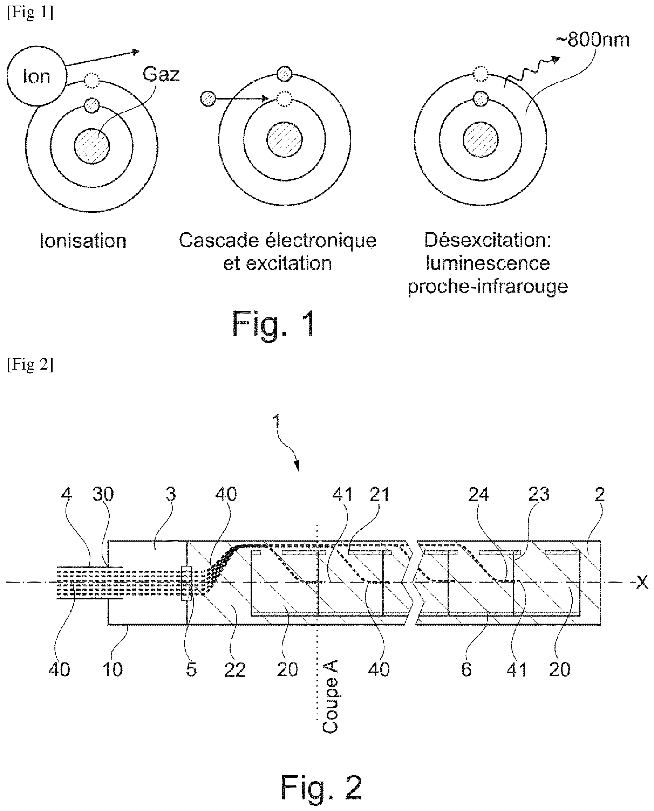

Cette solution repose ainsi sur la transduction du signal neutronique en un signal optique. En effet, lors d'une ionisation d'un gaz par un ion lourd issu de la réaction entre un neutron et un matériau actif, tel qu'un matériau fissile, une cascade électronique se produit et conduit à une excitation puis une désexcitation dans une zone spectrale allant de l'ultraviolet, d'environ 80 nm, à l'infrarouge moyen entre environ et 2000 et 3000 nm, avec une luminescence du fait de l'émission marquée dans la zone infrarouge et proche-infrarouge des atomes de ce même gaz. Ce phénomène est schématisé en figure 1.

Cette luminescence engendrée est ensuite collectée au moyen d'une fibre optique adaptée à la tenue sous irradiation, limitant de fait la zone spectrale à exploiter. En effet, il a été montré que des fibres optiques en silice sous irradiation atténuent très peu, typiquement quelques dB/km, un signal optique dont la longueur d'onde se situe dans le proche infrarouge, typiquement entre 800 et 1100 nm: voir [5].

La transduction du signal optique en un signal électrique est quant à elle réalisée hors cuve d'un réacteur nucléaire au moyen d'un ou plusieurs transducteurs du type photodiode, photomultiplicateur à base de silicium, voire caméra.

Cela étant, si les publications [1] à [5] précitées démontrent la preuve de concept du suivi de flux de neutrons par une méthode optique passive, elles ne proposent rien pour répondre au besoin d'un dispositif de mesure multipoint compact.

RU 2253135 C2 divulgue un procédé de détection de flux de neutrons par une méthode optique et un dispositif comportant une fibre optique.

Il existe par conséquent un besoin de proposer un dispositif de détection neutronique et /ou gamma permettant de réaliser une mesure du flux neutronique en ligne simultanée en plusieurs points, et ce avantageusement en respectant des contraintes d'encombrement qui peuvent être très fortes.

### Exposé de l'invention

Pour ce faire, l'invention a pour objet un dispositif de détection neutronique comprenant au moins une chambre d'ionisation étanche et à transduction optique qui s'étend selon un axe longitudinal (X) et comprenant plusieurs cavités optiques, chaque cavité optique logeant l'extrémité libre d'une fibre optique et comprenant au moins une paroi interne revêtue au moins partiellement d'au moins un matériau actif, les cavités optiques étant remplies d'un gaz, de préférence sous pression, apte à être ionisé par un ion issu de la réaction entre un neutron et le matériau actif, chaque cavité optique étant délimitée par un cylindre fermé à ses extrémités longitudinales par des disques de fermeture, la paroi interne latérale du cylindre étant revêtue au moins partiellement d'un matériau actif, les cylindres des cavités sont accolés les uns aux autres en étant centrés sur l'axe longitudinal (X) ou les cylindres des cavités sont distribués radialement autour d'une cavité centrale, chaque cylindre des cavités étant percé latéralement d'une ouverture débouchante, adaptée pour laisser passer une des fibres optiques dont l'extrémité libre est logée dans une cavité adjacente.

La chambre d'ionisation est étanche de préférence sous pression, typiquement sous quelques bars. Le gaz de remplissage est avantageusement un gaz noble, tel que l'argon, ou un mélange de gaz nobles.

Le matériau actif peut être un élément fissile ou encore du bore.

Selon un mode de réalisation avantageux, le dispositif comprend :
- un corps cylindrique d'axe central (X) délimitant intérieurement la chambre d'ionisation et une chambre de connexion accolée axialement à la chambre d'ionisation, la chambre de connexion étant percée d'une ouverture débouchante adaptée pour laisser passer un câble optique multifibres comprenant un nombre de fibres optiques au moins égal à celui du nombre de cavités ;
- un dispositif de passage étanche de cloison, agencé entre la chambre d'ionisation et la chambre de connexion, adapté pour laisser passer les fibres optiques dont les extrémités libres sont logées chacune dans une cavité optique.

La chambre de connexion assure le passage du câble optique multifibre vers l'extérieur du détecteur et garantit une rigidité mécanique robuste de la jonction entre le câble multifibre et la chambre d'ionisation. Cette chambre peut être non-étanche à la pression extérieure et dans ce cas aucune étanchéité n'est requise.

Le dispositif de passage étanche du faisceau de fibres à travers la paroi séparant la chambre de connexion et la chambre d'ionisation est réalisée de telle sorte que cette dernière reste étanche.

Une variante avantageuse de réalisation du dispositif passage étanche consiste en un regroupement des fibres optiques préalablement brasées entre elles, le regroupement étant lui-même brasé à la paroi de séparation entre la chambre de connexion et la chambre d'ionisation qu'il traverse.

Ainsi, selon cette variante, les fibres sont d'abord brasées entre elles, puis l'ensemble brasé est brasé à la paroi de séparation entre les chambres. Des brasures fortes à base d'argent, de cuivre ou d'aluminium sont préférées pour des températures d'exploitation jusqu'à 700°C. Des brasures faibles, à base d'étain-plomb sont envisageables jusqu'à 300°C.

Avec un tel cheminement, consistant en une introduction d'une fibre au travers d'une ouverture de passage latérale d'une cavité adjacente à celle dans laquelle l'extrémité libre de la fibre est logée, on prend en compte avantageusement le rayon de courbure des fibres optiques. Ce cheminement optimal vérifie ainsi la contrainte mécanique d'une fibre liée à son rayon de courbure minimal, entre 15 mm et 30 mm.

Selon cette variante, un des disques de fermeture du cylindre de cavité est percé en son centre d'une ouverture débouchante, adaptée pour laisser passer l'extrémité libre de la fibre optique.

Le positionnement central de l'extrémité libre d'une fibre optique a pour effet de maximiser la collecte des photons. En effet, le cône d'acceptance de la fibre couvre ainsi de façon maximale le volume de la cavité optique dans lequel elle est logée. Avantageusement, cette couverture du cône d'acceptance peut être augmentée en plaçant une lentille en forme de bille à l'extrémité de la fibre. En d'autres termes, cette lentille en bout de l'extrémité libre de la fibre permet d'augmenter l'efficacité de collecte de la fibre. Cet embout optique formant une lentille peut par exemple être soudée en extrémité de fibre. On peut se référer par exemple à : https://www.thorlabs.com/newgrouppage9.cfm?objectgroup_id=13120.

Selon une autre variante avantageuse de réalisation, la chambre d'ionisation comprend une zone dite de regroupement, exempte de cavités optiques, dans laquelle les différentes fibres optiques du câble sont regroupées pour être distribuées à l'extérieur des cavités optiques le long de la paroi interne latérale de la chambre d'ionisation, dans un secteur angulaire donné jusqu'à leur passage à travers l'ouverture débouchante latérale d'un cylindre de cavité.

De préférence, la longueur axiale de la zone de regroupement est supérieure ou égale à 2 cm.

Ainsi, avant de parvenir jusqu'aux différentes cavités optiques, les fibres sont regroupées en un faisceau dans la zone de regroupement dont la longueur axiale permet de respecter la contrainte due au rayon de courbure de chacune des fibres.

Avantageusement, le cylindre d'une cavité optique a un diamètre supérieur ou égal à 10 mm environ et une hauteur supérieure ou égale à 2 cm. Avec ces dimensions, on respecte les contraintes d'une part liées à la fabricabilité du détecteur et d'autre part celles dues au rayon de courbure minimal d'une fibre optique.

Selon un autre mode de réalisation avantageux, au moins une des cavités optiques comprend au moins une paroi de séparation agencée, de préférence dans un plan transversal à l'axe X, de sorte à mesurer des indices de spectre neutronique différents en fonction de la partie de la cavité de part et d'autre de la cavité. Autrement dit, la séparation de la cavité définit des sections efficaces différentes du ou des matériaux actifs, ce qui permet une mesure d'indice de spectre neutronique distribuée sur plusieurs points.

Ainsi, l'invention consiste essentiellement en un détecteur neutronique à chambre d'ionisation étanche à plusieurs cavités dont le fonctionnement de chacune est basé sur la transduction optique à partir d'une fibre optique à l'extrémité libre au sein de la cavité, qui permet une mesure multipoint de flux neutronique, les points de mesures étant axialement distribués.

Les dimensions des cavités et l'agencement des fibres optiques peuvent rendre le dispositif très compact.

L'extrémité libre d'une fibre doit pouvoir collecter un maximum de photons engendrés au sein d'une cavité optique. Son positionnement doit donc être précis. La collecte sera d'autant plus réduite qu'elle s'éloigne de la paroi d'entrée de la cavité optique. Ainsi, une extrémité de fibre optique contre la paroi d'entrée de la cavité optique sur le même plan que celle-ci engendre idéalement 100% de l'efficacité de collecte. Par ailleurs, pour des raisons de maintien mécanique de la fibre et de non-troncature du cône optique (angle solide), il est préférable de positionner l'extrémité libre de la fibre à environ au moins 1 mm de l'orifice d'entrée (ouverture débouchante) de la cavité optique. Ainsi de préférence, l'extrémité libre de la fibre optique est agencée entre 1 et 2 mm de l'ouverture débouchante de la cavité optique par laquelle elle sort, de préférence encore entre 1 et 1,5 mm.

Un détecteur de neutrons miniaturisé selon l'invention peut être adapté afin de résister aux environnements à haute température et à fort niveau d'irradiation tels que ceux trouvés à l'intérieur d'un réacteur nucléaire en fonctionnement.

Au final, un détecteur selon l'invention permet de respecter au mieux les contraintes d'intégration auxquelles il peut être confronté tout en préservant un excellent rapport-signal sur bruit des mesures multipoint de flux neutronique.

L'invention a également pour objet un procédé de fonctionnement d'un dispositif de détection neutronique qui vient d'être décrit selon lequel on réalise une mesure du flux neutronique simultanément en plusieurs points d'au moins une partie de la pluralité de cavités optiques.

Les applications de l'invention sont nombreuses parmi lesquelles on peut citer :
- la mesure en ligne simultanée en plusieurs points du flux neutronique et gamma dans un réacteur nucléaire ;
- la caractérisation et suivi du flux neutronique non seulement dans un réacteur nucléaire, que ce soit un réacteur expérimental ou un réacteur électrogène ;
- la localisation d'éléments combustibles fondus pendant ou après un accident grave (perte de refroidissement ou encore transitoire de puissance);
- la localisation de bouchons de conditionnement, en particulier en plutonium colloïdal, dans des procédés de traitements chimiques.

D'autre avantages et caractéristiques ressortiront mieux à la lecture de la description détaillée, faite à titre illustratif et non limitatif, en référence aux figures suivantes.

### Brève description des dessins

[Fig 1] La figure 1 est une vue schématique illustrant le principe d'une luminescence engendrée par l'ionisation d'un gaz par une particule ionisante, dénommée le plus souvent ion lourd, issue de la réaction entre un neutron et un matériau actif.
[Fig 2] la figure 2 est une vue schématique en coupe longitudinale d'un dispositif de détection neutronique selon l'invention.
[Fig 2A] la figure 2A est une vue en coupe transversale selon le plan A de la figure 2.
[Fig 3] la figure 3 est une vue en coupe longitudinale d'une cavité optique d'un dispositif selon une variante de réalisation avec cloison de séparation.

### Description détaillée

La figure 1 a déjà été décrite en préambule. Elle ne sera donc pas détaillée par la suite.

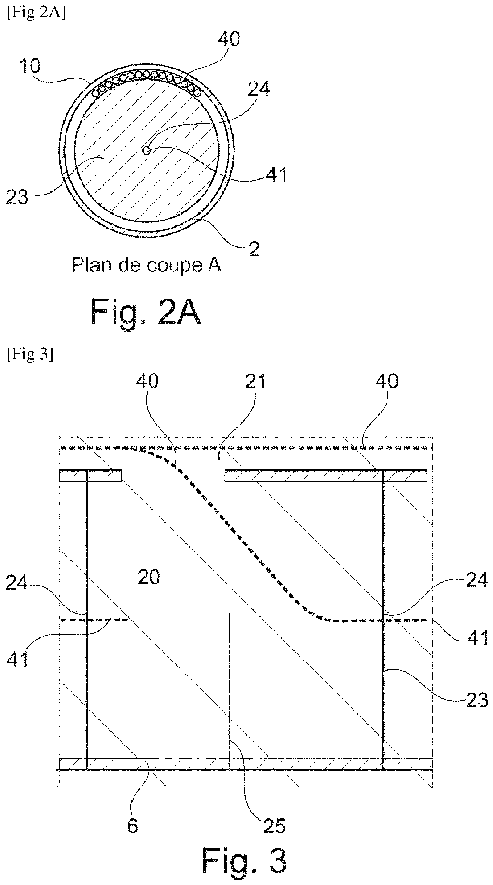

On a représenté en figures 2 et 2A un dispositif 1 de détection neutronique selon l'invention. Il comprend tout d'abord un corps cylindrique 10 d'axe central (X) délimitant intérieurement une chambre d'ionisation 2 étanche et à transduction optique, et une chambre de connexion 3 accolée axialement à la chambre d'ionisation.

La chambre de connexion 3 est percée d'une ouverture débouchante 30 adaptée pour laisser passer un câble optique multifibre 4 comprenant plusieurs fibres optiques 40, par exemple en silice.

Le passage du faisceau de fibres 40 à travers la paroi de séparation entre la chambre de connexion 3 et la chambre d'ionisation 2 est réalisée de telle sorte que cette dernière reste étanche. Ainsi, le dispositif de passage étanche 5 permet de laisser passer les fibres optiques 40 tout en garantissant l'étanchéité.

La chambre d'ionisation 2 étanche est remplie d'un gaz noble ou d'un mélange de gaz nobles sous pression d'un gaz, apte à être ionisé par un ion issu de la réaction entre un neutron et un matériau actif 6 et comprend plusieurs cavités optiques 20, de préférence identiques. Chaque cavité optique 20 est délimitée par un cylindre fermé à ses extrémités longitudinales, dont la paroi interne latérale est revêtue au moins partiellement d'un matériau actif 6, qui peut être un élément fissile ou du bore. Par exemple, le cylindre de la cavité optique peut être en acier inoxydable. Les disques 23 de fermeture du cylindre peuvent être également revêtus d'un matériau actif 6.

Comme montré sur la figure 2, les cylindres des cavités 20 sont accolés les uns aux autres en étant centrés sur l'axe central X du corps cylindrique 10.

Les cylindres des cavités 20 sont chacun percés latéralement d'une ouverture débouchante 21, à travers laquelle une des fibres optiques 40 passe.

La chambre de détection 2 comprenant, à côté du dispositif de passage étanche 5, une zone de regroupement 22, exempte de cavités optiques, dans laquelle les différentes fibres optiques 40 du câble 4 sont regroupées pour être distribuées à l'extérieur des cavités optiques 20 le long de la paroi interne latérale de la chambre d'ionisation.

Comme montré en figure 2A, la distribution des fibres optiques 40 est de préférence regroupée dans un seul secteur angulaire parallèlement aux cylindres des cavités optiques 20 jusqu'à leur passage à travers une ouverture débouchante latérale 21.

Pour amener une fibre optique 40 jusqu'à une cavité optique 20, les disques 23 de fermeture du cylindre de cavité sont percés chacun en leur centre d'une ouverture débouchante 24, qui permet de laisser passer l'extrémité libre 41 de la fibre optique 40 pour qu'elle soit positionnée selon l'axe central X dans une cavité donnée 20.

La figure 3 illustre une variante de réalisation d'une cavité optique 20 consistant en une paroi de séparation 25 agencée dans un plan transversal à l'axe X. Cette paroi 25 délimite des sous-cavités dont la section de matériau actif 6 est différente. Ainsi, on peut mesurer des indices de spectre neutronique différents en fonction de la sous-cavité.

D'autres variantes et améliorations peuvent être envisagées sans pour autant sortir du cadre de l'invention.

Si dans le mode des réalisation des figures 2 et 2A, la distribution spatiale des cavités optiques est un alignement axial avec accolement entre les cavités, on peut aussi envisager une distribution radiale des cavités autour d'une cavité centrale.

Si dans le mode des réalisation des figures 2 et 2A, la première cavité 20 n'est pas fonctionnelle dans le sens où aucune extrémité libre de fibre optique n'y est logée, on peut bien entendu envisager le contraire.

### Liste des références citées

[1] : M. Lamotte, G. De Izarra, C. Jammes, « Heavy-ions induced scintillation experiments, » J. Instrum., 14 (09) (2019), p. C09024, https://doi.org/10.1088/1748-0221/14/09/C09024
[2]: M. Lamotte, G. De Izarra, C. Jammes, « Development and first use of an experimental device for fission-induced spectrometry applied to neutron flux monitoring», Nucl. Instrum. Methods Phys. Res. A953 (2020), p. 163236, https://doi.org/10.1016/j.nima.2019.163236.
[3]: M. Lamotte, G. De Izarra, C. Jammes, «Design and irradiation test of an innovative optical ionization chamber technology», Nucl. Instrum. Methods Phys. Res. A968 (2020), p.163945, https://doi.org/10.1016j.nima.2020.163945.
[4]: M. Lamotte, G. De Izarra, C. Jammes, SCENA: «A simulation tool for radiation-induced gas scintillation», Nucl. Instrum. Methods Phys. Res. A982 (2020), p. 164576, https://doi.org/10.1016/j.nima.2020.164576.
[5]: Cheymol G., Long H., Villard J.-F., Brichard B., «High level gamma and neutron irradiation of silica optical fibers in CEA OSIRIS nuclear reactor», IEEE Trans. Nucl. Sci., 55 (4) (2008), pp. 2252-2258.

## Revendications

1. Dispositif (1) de détection neutronique comprenant au moins une chambre d'ionisation étanche (2) et à transduction optique, qui s'étend selon un axe longitudinal (X) et comprenant plusieurs cavités optiques (20), chaque cavité optique logeant l'extrémité libre (41) d'une fibre optique (40) et comprenant au moins une paroi interne revêtue au moins partiellement d'au moins un matériau actif, les cavités optiques étant remplies d'un gaz, de préférence sous pression, apte à être ionisé par un ion issu de la réaction entre un neutron et le matériau actif, chaque cavité optique étant délimitée par un cylindre fermé à ses extrémités longitudinales par des disques (23)
de fermeture, la paroi interne latérale du cylindre étant revêtue
au moins partiellement d'un matériau actif, les cylindres des cavités étant accolés les uns aux autres en étant centrés sur l'axe longitudinal (X) ou les cylindres des cavités étant distribués radialement autour d'une cavité centrale, chaque cylindre des cavités étant percé latéralement d'une ouverture débouchante (21), adaptée pour laisser passer une des fibres optiques dont l'extrémité libre est logée dans une cavité adjacente.

2. Dispositif (1) selon la revendication 1, comprenant :
- un corps cylindrique (10) d'axe central (X) délimitant intérieurement la chambre d'ionisation et une chambre de connexion (3) accolée axialement à la chambre d'ionisation, la chambre de connexion étant percée d'une ouverture débouchante adaptée pour laisser passer un câble optique multifibres (4) comprenant un nombre de fibres optiques au moins égal à celui du nombre de cavités ;
- un dispositif de passage étanche de cloison (5), agencé entre la chambre d'ionisation et la chambre de connexion, adapté pour laisser passer les fibres optiques dont les extrémités libres sont logées chacune dans une cavité optique.

3. Dispositif (1) selon la revendication 2, le dispositif de passage étanche (5) consistant en un regroupement des fibres optiques préalablement brasées entre elles, le regroupement étant lui-même brasé à la paroi de séparation entre la chambre de connexion et la chambre d'ionisation qu'il traverse.

4. Dispositif (1) selon l'une des revendications précédentes, un des disques de fermeture du cylindre de cavité étant percé en son centre d'une ouverture débouchante (24), adaptée pour laisser passer l'extrémité libre de la fibre optique.

5. Dispositif (1) selon l'une des revendications précédentes, la chambre d'ionisation comprenant une zone dite de regroupement (22), exempte de cavités optiques, dans laquelle les différentes fibres optiques du câble sont regroupées pour être distribuées à l'extérieur des cavités optiques le long de la paroi interne latérale de la chambre d'ionisation, dans un secteur angulaire donné jusqu'à leur passage à travers l'ouverture débouchante latérale d'un cylindre de cavité.

6. Dispositif (1) selon la revendication 5, la longueur axiale de la zone de regroupement étant supérieure ou égale à 2 cm.

7. Dispositif (1) selon l'une des revendications précédentes, le cylindre d'une cavité optique ayant un diamètre supérieur ou égal à 10 mm et une hauteur supérieure ou égale à 2 cm.

8. Dispositif (1) selon l'une quelconque des revendications précédentes, au moins une des cavités optiques comprenant au moins une paroi de séparation (25) agencée, de préférence dans un plan transversal à l'axe X, de sorte à mesurer des indices de spectre neutronique différents en fonction de la partie de la cavité de part et d'autre de la cavité.

9. Procédé de fonctionnement d'un dispositif (1) de détection neutronique selon l'une des revendications précédentes selon lequel on réalise une mesure du flux neutronique simultanément en plusieurs points d'au moins une partie de la pluralité de cavités optiques.

10. Utilisation d'un dispositif de détection neutronique selon l'une des revendications 1 à 8, pour la mesure en ligne simultanée en plusieurs points du flux neutronique et gamma dans un réacteur nucléaire.

11. Utilisation d'un dispositif de détection neutronique selon l'une des revendications 1 à 8, pour la caractérisation et suivi du flux neutronique dans un réacteur nucléaire.

12. Utilisation d'un dispositif de détection neutronique selon l'une des revendications 1 à 8, pour la localisation d'éléments combustibles fondus pendant ou après un accident grave, telle qu'une perte de refroidissement ou transitoire de puissance.

13. Utilisation d'un dispositif de détection neutronique selon l'une des revendications 1 à 8, pour la localisation de bouchons de conditionnement, en particulier en plutonium colloïdal, dans des procédés de traitements chimiques.

## Patentansprüche

1. Vorrichtung (1) zur Neutronendetektion, umfassend mindestens eine dichte Ionisationskammer (2) mit optischer Transduktion, die sich entlang einer Längsachse (X) erstreckt und mehrere optische Hohlräume (20) umfasst, wobei jeder optische Hohlraum das freie Ende (41) einer optischen Faser (40) aufnimmt und mindestens eine Innenwand umfasst, die mindestens teilweise mit mindestens einem aktiven Material überzogen ist, wobei die optischen Hohlräume mit einem Gas, bevorzugt unter Druck, gefüllt sind, das geeignet ist, durch ein Ion ionisiert zu werden, das aus der Reaktion zwischen einem Neutron und dem aktiven Material hervorgegangen ist, wobei jeder optische Hohlraum durch einen Zylinder begrenzt wird, der an seinen Längsenden durch Abschlussscheiben (23) verschlossen wird, wobei die seitliche Innenwand des Zylinders mindestens teilweise mit einem aktiven Material überzogen ist, wobei die Zylinder der Hohlräume auf die Längsachse (X) zentriert aneinandergefügt sind oder wobei die Zylinder der Hohlräume radial um einen zentralen Hohlraum herum verteilt sind, wobei jeder Zylinder der Hohlräume seitlich mit einer durchgehenden Öffnung (21) durchbohrt ist, die geeignet ist, eine der optischen Fasern durchzulassen, deren freies Ende in einem benachbarten Hohlraum aufgenommen ist.

2. Vorrichtung (1) nach Anspruch 1, umfassend:
- einen zylindrischen Körper (10) mit einer Mittelachse (X), der innen die Ionisationskammer und eine axial an die Ionisationskammer angefügte Anschlusskammer (3) begrenzt, wobei die Anschlusskammer mit einer durchgehenden Öffnung durchbohrt ist, die geeignet ist, ein mehrfaseriges optisches Kabel (4) durchzulassen, das eine Anzahl von optischen Fasern umfasst, die mindestens gleich der Anzahl von Hohlräumen ist;
- eine dichte Durchgangsvorrichtung (5) einer Zwischenwand, die zwischen der Ionisationskammer und der Anschlusskammer angeordnet ist und geeignet ist, die optischen Fasern durchzulassen, deren freie Enden jeweils in einem optischen Hohlraum aufgenommen sind.

3. Vorrichtung (1) nach Anspruch 2, wobei die dichte Durchgangsvorrichtung (5) aus einer Gruppierung von vorab zusammengelöteten optischen Fasern besteht, wobei die Gruppierung selbst an die Trennwand zwischen der Anschlusskammer und der Ionisationskammer, die es durchquert, gelötet ist.

4. Vorrichtung (1) nach einem der vorhergehenden Ansprüche, wobei eine der Abschlussscheiben des Hohlraumzylinders in ihrem Mittelpunkt mit einer durchgehenden Öffnung (24) durchbohrt ist, die geeignet ist, das freie Ende der optischen Faser durchzulassen.

5. Vorrichtung (1) nach einem der vorhergehenden Ansprüche, wobei die Ionisationskammer einen sogenannten Gruppierungsbereich (22) ohne optische Hohlräume umfasst, in dem die verschiedenen optischen Fasern des Kabels gruppiert werden, um außerhalb der optischen Hohlräume entlang der seitlichen Innenwand der Ionisationskammer in einem gegebenen Winkelsektor bis zu ihrem Durchgang durch die seitliche durchgehende Öffnung eines Hohlraumzylinders verteilt zu werden.

6. Vorrichtung (1) nach Anspruch 5, wobei die axiale Länge des Gruppierungsbereich 2 cm oder mehr beträgt.

7. Vorrichtung (1) nach einem der vorhergehenden Ansprüche, wobei der Zylinder eines optischen Hohlraums einen Durchmesser von 10 mm oder mehr und eine Höhe von 2 cm oder mehr hat.

8. Vorrichtung (1) nach einem der vorhergehenden Ansprüche, wobei mindestens einer der optischen Hohlräume mindestens eine Trennwand (25) umfasst, die, bevorzugt in einer Ebene quer zur Achse X, so angeordnet ist, dass verschiedene Neutronenspektrumindizes in Abhängigkeit von dem Teil des Hohlraums beidseits des Hohlraums gemessen werden.

9. Verfahren zum Betreiben einer Vorrichtung (1) zur Neutronendetektion nach einem der vorhergehenden Ansprüche, gemäß dem eine Messung des Neutronenflusses an mehreren Stellen mindestens eines Teils der Mehrzahl von optischen Hohlräumen gleichzeitig durchgeführt wird.

10. Verwendung einer Vorrichtung zur Neutronendetektion nach einem der Ansprüche 1 bis 8 zur gleichzeitigen Inline-Messung an mehreren Stellen des Neutronen- und Gammaflusses in einem Nuklearreaktor.

11. Verwendung einer Vorrichtung zur Neutronendetektion nach einem der Ansprüche 1 bis 8 zur Charakterisierung und Überwachung des Neutronenflusses in einem Nuklearreaktor.

12. Verwendung einer Vorrichtung zur Neutronendetektion nach einem der Ansprüche 1 bis 8 zur Lokalisierung von Brennelementen, die während oder nach einem schweren Störfall wie einem Kühlungsausfall oder einer Leistungstransiente geschmolzen sind.

13. Verwendung einer Vorrichtung zur Neutronendetektion nach einem der Ansprüche 1 bis 8 zur Lokalisierung von Aufbereitungspfropfen, insbesondere aus kolloidalem Plutonium, in chemischen Behandlungsverfahren.

## Claims

1. Device (1) for detecting neutrons comprising at least one sealed ionization chamber (2) with optical transduction, which extends along a longitudinal axis (X) and comprises a plurality of optical cavities (20), each optical cavity accommodating the free end (41) of an optical fibre (40) and comprising at least one inner wall coated at least partially with at least one active material, the optical cavities being filled with a gas, preferably a pressurized gas, that is able to be ionized by an ion arising from the reaction between a neutron and the active material, each optical cavity being delimited by a cylinder that is closed at its longitudinal ends by closing discs (23), the lateral inner wall of the cylinder being coated at least partially with an active material, the cylinders of the cavities adjoining one another while being centred on the longitudinal axis (X) or the cylinders of the cavities being distributed radially around a central cavity, each cylinder of the cavities being pierced laterally with a through-opening (21), which is designed to allow through one of the optical fibres whose free end is accommodated in an adjacent cavity.

2. Device (1) according to Claim 1, comprising:
- a cylindrical body (10) of central axis (X) delimiting on the inside the ionization chamber and a connection chamber (3) axially adjoining the ionization chamber, the connection chamber being pierced with a through-opening which is designed to allow through a multifibre optical cable (4) comprising a number of optical fibres at least equal to the number of cavities;
- a seal-tight passage partition device (5) arranged between the ionization chamber and the connection chamber and designed to allow through the optical fibres whose free ends are each accommodated in an optical cavity.

3. Device (1) according to Claim 2, the seal-tight passage device (5) consisting of a grouping of optical fibres previously brazed together, the grouping being brazed in turn to the separating wall between the connection chamber and the ionization chamber through which it passes.

4. Device (1) according to one of the preceding claims, one of the discs for closing the cavity cylinder being pierced at its centre with a through-opening (24) which is designed to let through the free end of the optical fibre.

5. Device (1) according to one of the preceding claims, the ionization chamber comprising a "grouping-together" region (22), without any optical cavities, in which the various optical fibres of the cable are grouped together to be distributed on the outside of the optical cavities along the lateral inner wall of the ionization chamber, in a given angular sector, until they pass through the lateral through-opening of a cavity cylinder.

6. Device (1) according to Claim 5, the axial length of the grouping-together region being greater than or equal to 2 cm.

7. Device (1) according to one of the preceding claims, the cylinder of an optical cavity having a diameter greater than or equal to 10 mm and a height greater than or equal to 2 cm.

8. Device (1) according to any one of the preceding claims, at least one of the optical cavities comprising at least one separating wall (25) arranged, preferably in a plane transverse to the X axis, so as to measure different neutron spectral indices according to the portion of the cavity on either side of the cavity.

9. Method for operating a device (1) for detecting neutrons according to one of the preceding claims, in which the neutron flux is measured simultaneously at multiple points of at least a portion of the plurality of optical cavities.

10. Use of a device for detecting neutrons according to one of Claims 1 to 8 for the simultaneous in-line measurement at multiple points of the gamma and neutron flux in a nuclear reactor.

11. Use of a device for detecting neutrons according to one of Claims 1 to 8 for characterizing and tracking the neutron flux in a nuclear reactor.

12. Use of a device for detecting neutrons according to one of Claims 1 to 8 for locating molten fuel elements during or after a serious accident, such as a loss of cooling or power transient.

13. Use of a device for detecting neutrons according to one of Claims 1 to 8 for locating conditioning blockages, in particular made of colloidal plutonium, in chemical treatment processes.
